# EUROPÄISCHE PATENTSCHRIFT

(11) **EP 2 060 164 B1**
(45) Veröffentlichungstag und Bekanntmachung des Hinweises auf die Patenterteilung: **25.01.2012**
(21) Anmeldenummer: 08162908.1
(22) Anmeldetag: 25.08.2008
(51) Int. Cl.: A01D 41/127

(54) **Selbstfahrende landwirtschaftliche Arbeitsmaschine**
Self-propelled agricultural machine
Machine agricole automobile

(30) Priorität: 16.11.2007 DE 102007055074
(43) Veröffentlichungstag der Anmeldung: 20.05.2009
(73) Patentinhaber: CLAAS Selbstfahrende Erntemaschinen GmbH, 33428 Harsewinkel (DE)
(72) Erfinder: Baumgarten, Joachim, Dr., 48361, Beelen (DE); Bußmann, Christoph, 33428, Harsewinkel (DE); Wilken, Andreas, 49143, Bissendorf (DE); Eggenhaus, Georg, 48369, Saerbeck (DE)

(56) Entgegenhaltungen:
- EP-A- 1 321 025
- EP-A- 1 650 715
- US-A- 4 458 471

## Beschreibung

Die Erfindung betrifft eine selbstfahrende landwirtschaftliche Arbeitsmaschine nach dem Oberbegriff des Anspruchs 1.

In der EP 1 321 025 A1 ist eine als Mähdrescher ausgebildete selbstfahrende landwirtschaftliche Arbeitsmaschine mit einer automatischen Steuereinrichtung zur Regelung der Vorfahrtgeschwindigkeit offenbart. Die Steuereinrichtung verändert die Vorfahrtgeschwindigkeit zur Steuerung des Durchsatzes des Mähdreschers und wird aktiviert, sobald eine Schichthöhenerfassungseinrichtung den Eintritt von Erntegut in einer Fördereinrichtung des Mähdreschers nachweist.

Aus der US 4,458,471 ist ein selbstfahrender Mähdreschers mit Arbeitsorganen, deren Arbeitsparameter einstellbar sind, bekannt. Der Mähdrescher wird mit einer Fahrgeschwindigkeit bewegt, wobei die Fahrgeschwindigkeit in Abhängigkeit von einem Arbeitsparameter des Mähdreschers mittels eines Vorfahrtreglers selbsttätig geregelt wird.

Die EP 1 650 715 A1 offenbart eins Anzeigeeinheit, auf der Maschinen- und Erntegutdaten visualisiert werden. Die Basisanzeige ist in mehrere verschiedene Funktionsfenster unterteilt, in denen die aktuellen Maschinen- und Erntegutdaten angezeigt werden, Der Übersichtlichkeit halber ist die Darstellung auf eine bestimmte Anzahl an Funktionsfenstern beschränkt obwohl wesentlich mehr Funktionsfenster zur Anzeige gebracht werden könnten. Da dies jedoch zu Lasten der Übersichtlichkeit und Interpretierbarkeit durch den Bediener geht, wird auf die gleichzeitige Darstellung aller Funktionsfenster verzichtet. Um dem Fahrer dennoch einen Hinweis auf.sich in verändernde Maschinen- oder Erntegutdaten zu geben, schlägt die EP 1 650 715 A1 vor, das Einblenden eines oder mehrerer zusätzlicher Funktionsfenster zu ermöglichen, indem die Grundfläche Basisanzeigefläche auf der Anzeigeeinheit reduziert wird, so dass benachbart zu der größenreduzierten Basisanzeigefläche ein neues Funktionsfenster dargestellt werden kann.

Aus der seitens der Anmelderin eingereichten DE 10 2004 059 543 A1 ist eine selbstfahrende landwirtschaftliche Arbeitsmaschine bekannt, bei der die Fahrgeschwindigkeit mittels eines Vorfahrtreglers in Abhängigkeit von unterschiedlichen Betriebssituationen nach unterschiedlichen Fahrstrategien geregelt wird. Die Vorteile und Wirkungsweise der Fahrgeschwindigkeitsregelung mittels eines Vorfahrtreglers sind in der genannten Deutschen Patentanmeldung beschrieben.

Versuche in der Praxis haben jedoch ergeben, dass eine Fahrgeschwindigkeitsregelung mittels eines Vorfahrtreglers zur Steuerung des Durchsatzes der selbstfahrenden landwirtschaftlichen Arbeitsmaschine durch unterschiedliche Erntegutparameter und/oder Arbeitsparameter der Arbeitsmaschine begrenzt wird. So ist es beispielsweise so, dass bei sehr dünnen Erntegutbeständen die Durchsatzmenge abnimmt und der Vorfahrtregler zwangsläufig die Fahrgeschwindigkeit erhöhen würde. Um die Fahrstabilität und somit die Sicherheit der Arbeitsmaschine zu gewährleisten, ist diese jedoch nur mit einer bestimmten Maximalgeschwindigkeit während des Arbeitseinsatzes betreibbar. Sofern nun die Erhöhung der Fahrgeschwindigkeit die maximal zulässige Arbeitsgeschwindigkeit erreicht, kann der Vorfahrtregler die Fahrgeschwindigkeit nicht weiter erhöhen. Da der Bediener der Arbeitsmaschine nun feststellt, dass der gewünschte Durchsatz nicht dem aktuell erzielten Durchsatz entspricht, wird er versuchen, die Arbeitsparameter der Arbeitsmaschine gemäß des aktuellen Durchsatzes anzupassen, um das Arbeitsergebnis nicht negativ zu beeinflussen. Dies erfordert jedoch ein sehr großes Fachwissen des Bedieners. Zudem ist die maximal zulässige Arbeitsgeschwindigkeit nur eines von einer Mehrzahl von begrenzenden Merkmalen für die Fahrgeschwindigkeitsregelung mittels des Vorfahrtreglers, so dass der Bediener vor dem Problem steht, dass er nicht weiß, welche Arbeitsparameter der Arbeitsmaschine er vorteilhaft anpasst, um ein optimales Arbeitsergebnis zu erreichen.

Aufgabe der vorliegenden Erfindung ist es, die beschriebenen Nachteile des Standes der Technik zu vermeiden und insbesondere eine selbstfahrende landwirtschaftliche Arbeitsmaschine gemäß des Oberbegriffs des Anspruchs 1 derart weiterzubilden, dass dem Bediener der Arbeitsmaschine bei der Fahrgeschwindigkeitsregelung mittels eines Vorfahrtreglers gezielt informationen zum Zustand des Vorfahrtreglers zur Verfügung stehen.

Diese Aufgabe wird erfindungsgemäß durch die Merkmale des Anspruchs 1 gelöst.
Dadurch, dass dem Bediener der Arbeitsmaschine in der Steuer-, Bedien- und Anzeigeeinheit unmittelbar der Erntegutparameter und/oder der Arbeitsparameter der Arbeitsmaschine angezeigt wird, der aktuell die Fahrgeschwindigkeitsregelung mittels des Vorfahrtreglers begrenzt, erhält der Bediener aktuell und gezielt stets die Information, welcher Erntegutparameter und/oder Arbeitsparameter der Arbeitsmaschine begrenzend auf die Fahrgeschwindigkeitsregelung des Vorfahrtreglers einwirkt, so dass er gezielt entscheiden kann, ob er einzelne Arbeitsparameter an die geänderte Fahrgeschwindigkeit und somit beispielsweise einen geänderten Erntegutdurchsatz anpasst, oder ob er die Einstellungen unverändert lässt, da die zu erwartenden Auswirkungen auf das Arbeitsergebnis der Arbeitsmaschine nicht so gravierend sind.

Um die unterschiedlichen begrenzenden Erntegutparameter und/oder Arbeitsparameter der Arbeitsmaschine schnell und intuitiv für den Bediener erfassbar anzuzeigen, wird bei einer vorteilhaften Weiterbildung der Erfindung der aktuell die Fahrgeschwindigkeitsregelung mittels des Vorfahrtreglers begrenzende Erntegutparameter und/oder Arbeitsparameter der Arbeitsmaschine in der Steuer-, Bedien- und Anzeigeeinheit als Piktogramm angezeigt. Unter Anzeigen ist hier beispielsweise die Darstellung in einem auf der Arbeitsmaschine angeordneten Display und/oder die Aktivierung von entsprechenden Warnleuchten zu verstehen, wobei sowohl das Display, als auch die Warnleuchten Elemente der Steuer-, Bedien- und Anzeigeeinheit sind.

Um die unterschiedlichen begrenzenden Erntegutparameter und/oder Arbeitsparameter der Arbeitsmaschine schnell und einfach für den Bediener erfassbar anzuzeigen, wird bei einer vorteilhaften Weiterbildung der Erfindung der aktuell die Fahrgeschwindigkeitsregelung mittels des Vorfahrtreglers begrenzende Erntegutparameter und/oder Arbeitsparameter der Arbeitsmaschine in der Steuer-, Bedien- und Anzeigeeinheit als Begriff angezeigt. Unter Anzeigen ist hier beispielsweise die Darstellung in einem auf der Arbeitsmaschine angeordneten Display und/oder die Aktivierung von entsprechenden Warnleuchten zu verstehen, wobei sowohl das Display, als auch die Warnleuchten Elemente der Steuer-, Bedien- und Anzeigeeinheit sind.

Weiterhin ist es selbstverständlich denkbar, dass dem Bediener in der Steuer-, Bedien- und Anzeigeeinheit der aktuell die Fahrgeschwindigkeitsregelung mittels des Vorfahrtreglers begrenzende Erntegutparameter und/oder Arbeitsparameter der Arbeitsmaschinen sowohl als Piktogramm als auch als Begriff angezeigt wird, so dass es für den Bediener sehr einfach ist, die Information gezielt zu erfassen. Alternativ kann er mittels einer entsprechenden Einstellung in der Steuer-, Bedien- und Anzeigeeinheit auswählen, in welcher Form er die Information angezeigt bekommen will.

Bei einer vorteilhaften Ausgestaltung erfolgt die Anzeige des die Fahrgeschwindigkeit mittels des Vorfahrtreglers begrenzenden Erntegutparameters und/oder Arbeitsparameters der Arbeitsmaschine in einem gesonderten Bildschirmfenster der Steuer-, Bedien- und Anzeigeeinheit, so dass die Informationserfassung für den Bediener der Arbeitsmaschine vereinfacht ist. Besonders schnell und intuitiv erfasst der Bediener die Information, wenn das gesonderte Bildschirmfenster weitere Bildschirmfenster der Steuer-, Bedien- und Anzeigeinheit zumindest zeit- und/oder bereichsweise überdeckt, so dass die aktuell für den Bediener wichtige Information in den Vordergrund gesetzt wird.

Vorteilhaft ist zu dem wenigstens einen Erntegutparameter und/oder einen Arbeitsparameter der Arbeitsmaschine jeweils zumindest eine untere Regelgrenze oder eine obere Regelgrenze oder eine untere und eine obere Regelgrenze definierbar, so dass die Fahrgeschwindigkeitsregelung mittels des Vorfahrtreglers in klar definierten Grenzen erfolgt, die sowohl von der Sicherheit als auch von der Fahrstabilität der Arbeitsmaschine als auch von äußeren Rahmenbedingen abhängen können. Bei einer vorteilhaften Ausgestaltung sind die jeweiligen Regelgrenzen mittels der Steuer-, Bedien- und Anzeigeeinheit eingebar und/oder veränderbar, so dass der Bediener individuell die aus seiner Sicht passenden Regelgrenzen definieren kann.

Um dem Bediener der Arbeitsmaschine nicht nur eine Information zur Verfügung zu stellen, welcher Erntegutparameter und/oder Arbeitsparameter begrenzend wirkt, sondern ihm zusätzlich einen Rückschluss zu erlauben, ob die definierten Regelgrenzen optimal gewählt sind, wird ihm bei einer vorteilhaften Weiterbildung in der Steuer-, Bedien- und Anzeigeeinheit jeweils sowohl der Erntegutparameter und/oder der Arbeitsparameter der Arbeitsmaschine angezeigt, der aktuell die Fahrgeschwindigkeitsregelung mittels des Vorfahrtreglers begrenzt, als auch die für den jeweiligen Erntegutparameter und/oder Arbeitsparameter der Arbeitsmaschine definierten Regelgrenzen.

Bei einer vorteilhaften Ausgestaltung der Erfindung ist der die Fahrgeschwindigkeitsregelung mittels des Vorfahrtreglers begrenzende Arbeitsparameter der Arbeitsmaschine die Fahrgeschwindigkeit, so dass während der Einsatzfahrt stets die Fahrstabilität und somit die Fahrsicherheit der Arbeitsmaschine gewährleistet ist.

Bei einer vorteilhaften Ausgestaltung der Erfindung ist der die Fahrgeschwindigkeitsregelung mittels des Vorfahrtreglers begrenzende Arbeitsparameter der Arbeitsmaschine die Motorauslastung, so dass der Motor beispielsweise nicht überlastet wird und/oder der Motor in einem Drehzahlbereich betrieben werden kann, in der ein möglichst geringer Kraftstoffverbrauch gewährleistet ist. Entsprechend sind dann die Regelgrenzen definiert.

Bei einer vorteilhaften Ausgestaltung der Erfindung ist der die Fahrgeschwindigkeitsregelung mittels des Vorfahrtreglers begrenzende Arbeitsparameter der Arbeitsmaschine der Zustand eines oder mehrerer Arbeitsaggregate und/oder derer Arbeitsmedien, so dass beispielsweise der Antriebsmotor nicht überhitzt wird, falls nicht genügend Kühlflüssigkeit in der Motorkühlanlage vorhanden sein sollte, oder dass beispielsweise eine Hydraulikpumpe nicht trocken läuft, falls nicht genügend Hydrauliköl in dem System zur Verfügung steht, oder dass beispielsweise der Antriebsmotor nicht ausreichend geschmiert wird, falls die Temperatur des Motoröls in einem kritischen Bereich liegt. Die hier genannten Beispiele stehen für eine Vielzahl von Zuständen eines oder mehrerer Arbeitsaggregate und/oder derer Arbeitsmedien, die die Fahrgeschwindigkeitsregelung mittels des Vorfahrtreglers begrenzen können. Unter Arbeitsmedien sind die zur Funktion der Arbeitsaggregate benötigten Gase und/oder Flüssigkeiten zu verstehen, wie beispielsweise Druckluft, Hydrauliköl, Schmieröl und/oder Kühlflüssigkeit.

Bei einer vorteilhaften Ausgestaltung der Erfindung ist der die Fahrgeschwindigkeitsregelung mittels des Vorfahrtreglers begrenzende Arbeitsparameter der Arbeitsmaschine die Reinigungsleistung einer Erntegutreinigungseinrichtung der Arbeitsmaschine, so dass beispielsweise sobald die Reinigungsverlustsensoren detektieren, dass die Reinigungsverluste in einen unerwünschten Bereich ansteigen, die Fahrgeschwindigkeitsregelung mittels des Vorfahrtreglers derart begrenzt wird, dass die Fahrgeschwindigkeit nicht weiter erhöht wird, um die die Reinigungssiebe belastende Erntegutmenge zu begrenzen. Das Ansteigen der Reinigungsverluste steht hier beispielhaft für eine Vielzahl von die Reinigungsleistung einer Erntegutreinigungseinrichtung begrenzenden Zuständen.

Bei einer vorteilhaften Ausgestaltung der Erfindung ist der die Fahrgeschwindigkeitsregelung mittels des Vorfahrtreglers begrenzende Arbeitsparameter der Arbeitsmaschine die Abscheideleistung einer Erntegutabscheideeinrichtung der Arbeitsmaschine, so dass beispielsweise sobald die Abscheideverlustsensoren detektieren, dass die Abscheideverluste in einen unerwünschten Bereich ansteigen, die Fahrgeschwindigkeitsregelung mittels des Vorfahrtreglers derart begrenzt wird, dass die Fahrgeschwindigkeit nicht weiter erhöht wird, um die die Abscheideeinrichtung belastende Erntegutmenge zu begrenzen. Das Ansteigen der Abscheideverluste steht hier beispielhaft für eine Vielzahl von die Abscheideleistung einer Erntegutabscheideeinrichtung begrenzenden Zuständen.

Bei einer vorteilhaften Ausgestaltung der Erfindung ist der die Fahrgeschwindigkeitsregelung mittels des Vorfahrtreglers begrenzende Arbeitsparameter der Arbeitsmaschine ein Überladeprozess des Erntegutes in ein externes Transportfahrzeug. Um Erntegutverluste beim Überladeprozess des Erntegutes in ein externes Transportfahrzeug zu vermeiden, ist es wichtig, dass das Arbeitsfahrzeug und das Transportfahrzeug eine nahezu gleich hohe Fahrgeschwindigkeit aufweisen, so dass das Erntegut gezielt überladen werden kann. Da die Fahrgeschwindigkeit somit während des Überladens begrenzt ist, kann der Vorfahrtregler auch keine Fahrgeschwindigkeitsregelung beispielsweise in Abhängigkeit des Erntegutbestandes vornehmen, so dass die Regelung somit durch den Überladeprozess begrenzt wird.

Bei einer vorteilhaften Ausgestaltung der Erfindung ist der die Fahrgeschwindigkeitsregelung mittels des Vorfahrtreglers begrenzende Arbeitsparameter der Arbeitsmaschine die seitens der Arbeitsmaschine erfasste Entfernung zum Reihen- bzw. Feldende bzw. -anfang ist, so dass bei einer seitens der Arbeitsmaschine erfassten geringen Entfernung zum Reihen- bzw. Feldende bzw. -anfang die Fahrgeschwindigkeitsregelung mittels des Vorfahrtreglers derart begrenzt wird, dass beispielsweise vor der Einfahrt in ein Feld bzw. eine Reihe die Fahrgeschwindigkeit mittels des Vorfahrtreglers nicht stark erhöht wird, so dass sobald das Feld bzw. die Reihe beginnt, die Arbeitsmaschine stark abgebremst werden muss. Weiterhin wird beispielsweise kurz vor dem Ende des Feldes bzw. der Reihe die Fahrgeschwindigkeit auch bei einer geringfügig ansteigenden Erntegutmenge nicht verlangsamt, da es sonst am Feld- bzw. Reihenende zu einer starken Beschleunigung des Arbeitsfahrzeuges kommen würde. Somit begrenzt die erfasste Entfernung die Fahrgeschwindigkeitsregelung mittels des Vorfahrtreglers.

Bei einer vorteilhaften Ausgestaltung der Erfindung ist der die Fahrgeschwindigkeitsregelung mittels des Vorfahrtreglers begrenzende Erntegutparameter der den Arbeitsorganen der Arbeitsmaschine zugeführte Erntegutdurchsatz, so dass beispielsweise bei Erreichen einer definierten maximalen Erntegutmenge der Vorfahrtregler die Fahrgeschwindigkeit der Arbeitsmaschine nicht weiter erhöht, obwohl beispielsweise bei der Motorleistung noch Reserven vorhanden wären. Somit begrenzt der Erntegutdurchsatz die Fahrgeschwindigkeitsregelung.

Bei einer vorteilhaften Ausgestaltung der Erfindung ist der die Fahrgeschwindigkeitsregelung mittels des Vorfahrtreglers begrenzende Erntegutparameter der Anteil der sich in einer Überkehreinrichtung der Arbeitsmaschine befindlichen Erntegutkörner, so dass beispielsweise bei einem sich erhöhenden Anteil an Erntegutkörnern in der Überkehreinrichtung ab der definierten Regelgrenze die Fahrgeschwindigkeit mittels des Vorfahrtreglers nicht weiter erhöht wird, damit sich der Anteil an Erntegutkörnern in der Überkehreinrichtung nicht noch weiter erhöht.

Bei einer vorteilhaften Ausgestaltung der Erfindung ist der die Fahrgeschwindigkeitsregelung mittels des Vorfahrtreglers begrenzende Erntegutparameter das Volumen der sich in einer Überkehreinrichtung der Arbeitsmaschine befindlichen Erntegutmenge, so dass beispielsweise bei einem sich erhöhenden Volumen an Erntegutmenge in der Überkehreinrichtung ab der definierten Regelgrenze die Fahrgeschwindigkeit mittels des Vorfahrtreglers nicht weiter erhöht wird, damit sich das Volumen an Erntegutmenge in der Überkehreinrichtung nicht noch weiter erhöht.

Bei einer vorteilhaften Ausgestaltung der Erfindung wird die Fahrgeschwindigkeitsregelung mittels des Vorfahrtreglers selbsttätig immer an einer durch den begrenzend wirkenden Erntegutparameter und/oder Arbeitsparameter der Arbeitsmaschine bedingten Regelgrenze geregelt. Dies bedeutet, dass der Vorfahrtregler, trotz einer Begrenzung aufgrund eines Erntegutparameters und/oder Arbeitsparameters selbsttätig dauerhaft versucht, die Fahrgeschwindigkeit der Arbeitsmaschine an die seitens des Vorfahrtreglers definierten Sollfahrgeschwindigkeit anzupassen. Hierbei regelt der Vorfahrtregler somit die Fahrgeschwindigkeit ständig "entlang" der Regelgrenze, die sich durch die Begrenzung ergibt. Wenn beispielsweise die Siebbelastung der Reinigungseinrichtung der begrenzend wirkende Arbeitsparameter ist, so versucht der Vorfahrtregler, sobald sich die begrenzend wirkende Siebbelastung auch nur geringfügig verbessert, die Fahrgeschwindigkeit wieder zu erhöhen. Somit ergibt sich die Fahrgeschwindigkeit immer aus der aktuellen Siebbelastung der Reinigungseinrichtung. Das hier genannte Beispiel steht für eine Vielzahl von Regelgrenzen, die der Vorfahrtregler für die Fahrgeschwindigkeitsregelung als Regelgröße berücksichtigt.

In einer vorteilhaften Ausgestaltung ist die selbstfahrende landwirtschaftliche Arbeitsmaschine als Mähdrescher ausgebildet.

Anhand der beigefügten Zeichnungen wird die Erfindung nachfolgend näher erläutert.
Es zeigen:
Fig. 1: eine Seitenansicht einer als Mähdrescher ausgebildeten Arbeitsmaschine,
Fig. 2: eine Displaydarstellung der Anzeigeeinheit in einer ersten Ausführungsform und
Fig. 3: eine Displaydarstellung des Anzeigeeinheit in einer zweiten Ausführungsform.

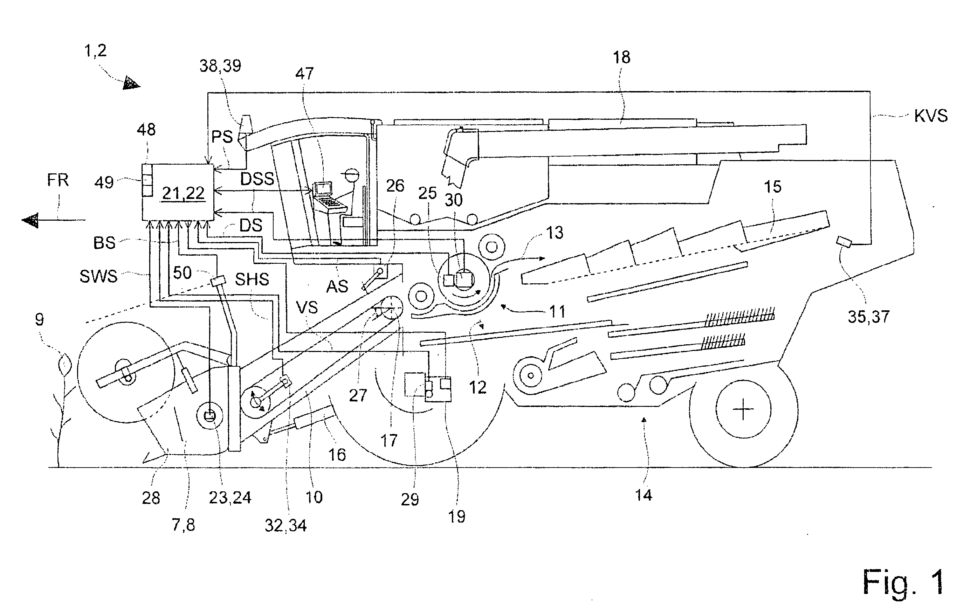

Die in Fig.1 dargestellte, als Mähdrescher 1 ausgeführte selbstfahrende landwirtschaftliche Arbeitsmaschine 2 nimmt frontseitig ein als Schneidwerk 7 ausgeführtes Vorsatzgerät 8 auf, welches das auf dem Feld gewachsene Erntegut 9 mäht und anschließend einem Schrägförderer 10 zuführt. Der Schrägförderer 10 übergibt das Erntegut 9 an ein nachgeschaltetes Dreschwerk 11, welches das Erntegut 9 aufbereitet, wobei es in ein Korn-Spreu-Gemisch 12 und ein aus ausgedroschenen Halmen bestehenden Gutstrom 13 geteilt wird. Das Korn-Spreu-Gemisch 12 wird zu einer Reinigungseinrichtung 14 gefördert, die die Körner von den Nichtkornbestandteilen, d. h. von Halm- und Spreuteilen trennt. Der aus ausgedroschenen Halmen bestehende Gutstrom 13 gelangt auf eine als Hordenschüttler 15 ausgebildete Abscheideeinrichtung, der den Gutstrom 13 in den rückwärtigen Bereich des Mähdreschers 1 fördert und dabei im Gutstrom 13 vorhandene Körner, Kurzstroh und Spreu abtrennt, die ebenfalls der Reinigungseinrichtung 14 zugeführt werden. Es liegt im Rahmen der Erfindung, dass die Abscheideeinrichtung auch als Axialrotor ausgebildet sein kann. Ebenso liegt es im Rahmen der Erfindung, dass das Dreschwerk und die Abscheideeinrichtung als miteinander verbundener Axialrotor ausgebildet sein kann.
Der Schrägförderer 10 wird über Hubzylinder 16 die gehäuseseitig schwenkbeweglich am Mähdrescher 1 und kolbenstangenseitig schwenkbeweglich mit dem Schrägförderer 10 verbunden sind um eine quer zur Fahrtrichtung FR angeordnete Schwenkachse 17 verschwenkbar geführt. Der Mähdrescher 1 weist einen Verbrennungsmotor 18 auf, der einen Fahrantrieb 19 zum Antrieb der Vorderräder 20 des Mähdreschers 1, einen Dreschwerkantrieb zum Antrieb des Dreschwerks 11 und einen Schneidwerksantrieb zum Antrieb des Schneidwerks 7 antreibt.
Der Fahrantrieb 19 ist mit einem Geschwindigkeitsregier ausgestattet, der Steuersignale von einem Vorfahrtregler 21 empfängt, der die Fahrgeschwindigkeit des Mähdreschers 1 durchgängig selbsttätig regelt. Der Vorfahrtregler 21 weist eine Steuer- und Regeleinheit 22 auf, die mit mehreren Sensoren 23, 25, 26, 29, 30, 34, 37, 39, 50 in Verbindung steht, die am Mähdrescher 1 und am Schneidwerk 7 angeordnet sind.
Am vorderen Ende des Schneidwerks 7 ist ein Bestandssensor 50 angeordnet, der den in Fahrtrichtung FR vor dem Mähdrescher 1 liegenden Bestand sensiert. Der Bestandsensor 50 generiert in Abhängigkeit vom Feldbewuchs Bestandssignale BS. Ein weiterer Sensor 25 überwacht einen Ein/Aus-Schalter für das Dreschwerk 11 und generiert in Abhängigkeit vom Betriebsstatus des Dreschwerks 11 ein Dreschwerksignal DS. Ein weiterer Sensor 23 überwacht einen Ein/Aus-Schalter 24 für das Schneidwerk 7 und generiert in Abhängigkeit vom Betriebsstatus des Schneidwerks 7 ein Schneidwerkssignal SWS.
Ein Drehwinkelsensor 26 ist in der Schwenkachse 17 des Schrägförderers 10 angeordnet und detektiert auf an sich bekannte Weise einen Verdrehwinkel 27 zwischen dem Schrägförderer 10 und dem Mähdrescher 1. Der Drehwinkelsensor 26 generiert bei einem bestimmten Verdrehwinkel 27, bei dem das Schneidwerk 7 eine Arbeitsposition 28 einnimmt, ein Arbeitspositionssignal AS.
Am Fahrantrieb 19 ist ein Drehzahlsensor 29 angeordnet, der auf an sich bekannte Weise die Fahrgeschwindigkeit und die Fahrtrichtung FR des Mähdreschers 1 detektiert. Der Drehzahlsensor 29 generiert proportional zur Fahrgeschwindigkeit bei Vorwärtsfahrt des Mähdreschers 1 ein Fahrgeschwindigkeitssignal VS.
Ein Durchsatzsensor 30 ist auf an sich bekannte Weise an dem Dreschwerkantrieb angeordnet und detektiert ein Dreschtrommeldrehmoment, das abhängig vom Erntegutdurchsatz durch das Dreschwerk 11 ist. Der Durchsatzsensor 30 generiert proportional zum Erntegutdurchsatz durch das Dreschwerk 7 ein Durchsatzsignal DSS. Der Schrägförderer 10 weist eine an sich bekannte Schichthöhenerfassungseinrichtung 32 auf, die die Schichthöhe des Erntegutes im Schrägförderer 10 detektiert. Die Schichthöhenerfassungseinrichtung 32 weist einen Sensor 34 auf, der ein Schichthöhensignal SHS generieren, das proportional zur Schichthöhe ist.
Am Ende des Hordenschüttlers 15 ist eine Körnerstrommesseinrichtung 35 angeordnet, die einen Abscheideverlust im Gutstrom 13 sensiert. Die Körnerstrommesseinrichtung 35 weist mehrere Klopfsensoren 37 auf, die auf an sich bekannte Weise Kornverlustsignale KVS generieren, die proportional zum Abscheideverlust sind.
Der Mähdrescher ist zusätzlich mit einer Ortungseinrichtung 38 ausgestattet, die die Position des Mähdreschers 1 sensiert. Die Ortungseinrichtung 38 weist Sensoren 39 auf, die ein Positionssignal PS generieren, das abhängig vom Standort des Mähdreschers 1 ist.
Die Steuer- und Regeleinrichtung 22 vergleicht die von den Sensoren 34 erzeugten Schichthöhensignale SHS mit einer vorgegebenen minimalen Schichthöhe. Ist die ermittelte Schichthöhe gleich groß oder größer als die minimale Schichthöhe, generiert die Steuer- und Regeleinheit 22 ein Einsatzbetriebssignal, welches an den Vorfahrtregler 21 übermittelt wird. Bei Empfang des Einsatzbetriebssignals erkennt der Vorfahrtregler 21, das der Mähdrescher 1 sich im Einsatzbetrieb befindet, empfängt der Vorfahrtregler 21 kein Einsatzbetriebsignal erkennt der Vorfahrtregler 21, dass sich der Mähdrescher im Leerbetrieb befindet.
Um die Qualität der Erkennung zu erhöhen, ist eine Ausführung denkbar bei der der Vorfahrtregler 21 beispielsweise den Einsatzbetrieb und den Leerbetrieb nur dann erkennt, wenn weitere Einsatzbetriebssignale an den Vorfahrtregler 21 übermittelt werden.
Die Steuer- und Regeleinheit 22 vergleicht das von dem Sensor 25 erzeugte Dreschwerksignal DS mit einem vorgegebenen Einschaltwert und ermittelt damit den Betriebszustand des Dreschwerks 11. Ist das Dreschwerk 11 eingeschaltet, generiert die Steuer- und Regeleinheit 22 ein erstes Einsatzbetriebssignal.
Ebenso ist es denkbar, das die Steuer- und Regeleinheit 22 das von dem Sensor 23 erzeugte Schneidwerksignal SWS mit einem Einschaltwert für das Schneidwerk 7 vergleicht und damit den Betriebszustand des Schneidwerks 7 ermittelt. Ist das Schneidwerk 7 eingeschaltet, generiert die Steuer- und Regeleinheit 22 ein zweites Einsatzbetriebssignal.
Vorstellbar ist auch, das die Steuer- und Regeleinheit 22 das von dem Drehwinkelsensor 26 erzeugte Arbeitspositionssignal AS mit einem vorgegebenen Arbeitspositionswert vergleicht und dadurch die Arbeitsposition 28 des Schneidwerks 7 ermittelt. Steht das Schneidwerk 7 in der Arbeitsposition 28, generiert die Steuer- und Regeleinheit 22 ein drittes Einsatzbetriebssignal.
Weiterhin ist es möglich, das die Steuer- und Regeleinrichtung 22 die von dem Drehzahlsensor 29 erzeugten Fahrgeschwindigkeitssignale VS mit einem Fahrgeschwindigkeitsollwert vergleicht und erkennt, ob sich der Mähdrescher 1 mit einer minimalen Fahrgeschwindigkeit bewegt. Ist die Fahrgeschwindigkeit des Mähdreschers 1 gleich groß oder größer als die minimale Fahrgeschwindigkeit, generiert die Steuer- und Regeleinheit 22 ein viertes Einsatzbetriebssignal.
In einer weiteren Ausführung der Erfindung ist denkbar, das der Vorfahrtregler 21 über die Steuer- und Regeleinheit 22 mit dem Bestandsensor 50 verbunden ist und der Vorfahrtregler 21 in Abhängigkeit von den von dem Bestandssensor 50 generierten Bestandsignalen BS erkennt, ob sich der Mähdrescher 1 im Bestand oder außerhalb des Bestandes bewegt, das heißt, ob sich der Mähdrescher 1 im Leerbetrieb oder im Einsatzbetrieb befindet.
Ebenso ist es vorstellbar, dass der Vorfahrtregler 21 mit der Ortungsvorrichtung 38 verbunden ist und der Vorfahrtregler 21 in Abhängigkeit von dem bereits zurückgelegten Fahrweg sowie der Schnittbreite des Schneidwerks 7 und einer Schlagkarte erkennt, ob sich der Mähdrescher im Leerbetrieb oder im Einsatzbetrieb befindet. Wenn der Vorfahrtregler 21 erkennt, dass sich der Mähdrescher 1 im Einsatzbetrieb befindet, regelt der Vorfahrtregler 21 die Fahrgeschwindigkeit in Abhängigkeit von einem Erntegutparameter wie beispielsweise den von der Körnerstrommesseinrichtung 35 ermittelten Abscheideverlusten und/oder einem Arbeitsparameter des Mähdreschers 1 wie beispielsweise der Schichthöhe im Schrägförderer 10.
Über eine Steuer-, Bedien- und Anzeigeeinheit 22,47 die mit dem Vorfahrtregler 21 verbunden ist, gibt der Fahrer eine Kornverlustgrenze 48 vor, mit der der Vorfahrtregler 21 eine Sollschichthöhe für den Schrägförderer 10 berechnet. Der Vorfahrtregler 21 regelt die Fahrgeschwindigkeit derart, dass die Schichthöhe die berechnete Sollschichthöhe 49 erreicht. Der Vorfahrtregler 21 vergleicht den Abscheideverlust mit der Kornverlustgrenze 48. Ist der Abscheideverlust über einen bestimmten Zeitraum hinaus größer als die Kornverlustgrenze 48 wird die Fahrgeschwindigkeit vermindert, bis der Abscheideverlust der Kornverlustgrenze 48 entspricht und zugleich wird eine neue Sollschichthöhe 49 festgelegt. Wenn der Abscheideverlust über einen vorgegebenen Zeitraum kleiner ist als die Kornverlustgrenze 48 wird die Fahrgeschwindigkeit erhöht, bis der Abscheideverlust der Kornverlustgrenze 48 entspricht. Der Vorfahrtregler 21 aktualisiert die Schichthöhe durch Änderung der Fahrgeschwindigkeit während des Einsatzbetriebes kontinuierlich, um sich an die unterschiedlichen Erntebedingungen anzupassen.
Da die beschriebene automatische Fahrgeschwindigkeitsregelung mittels des Vorfahrtreglers 21 zur Steuerung des Durchsatzes des Mähdreschers 1 jedoch durch unterschiedliche Erntegutparameter und/oder Arbeitsparameter begrenzt wird, wird dem Bediener in der mit der Steuer- und Regeleinheit 22 verbundenen Anzeigeeinheit 47 das begrenzend wirkende Elemente, beziehungsweise die begrenzend wirkende Einstellung, beziehungsweise der begrenzend wirkende Erntegutparameter angezeigt, so dass er mittels der Steuer-, Regel- und Anzeigeeinheit 22,47 entsprechende Änderungen an den Einstellungen des Mähdreschers 1 vornehmen kann.

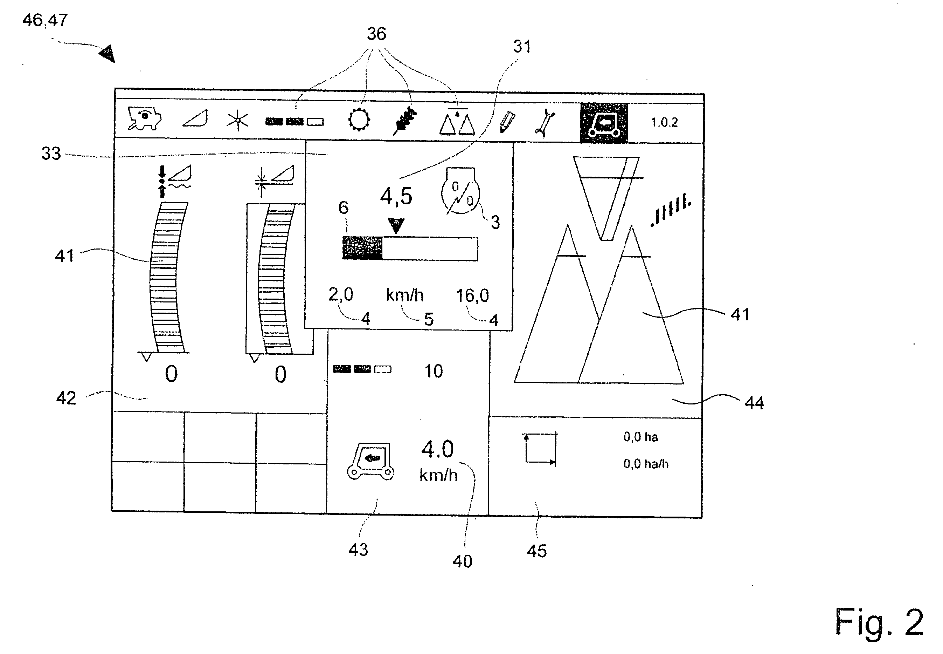

Figur 2 zeigt eine beispielhafte Darstellung des Displays 46 der Anzeigeeinheit 47, im Falle einer erfolgten Begrenzung der automatischen Fahrgeschwindigkeitsregelung mittels des Vorfahrtreglers aufgrund eines Arbeitsparameters des Mähdreschers 1. Die Basisanzeigefläche 45 ist unterteilt in mehrere Bereiche 42,43,44, die dem Bediener während des Einsatzbetriebes, aber auch während des Leerbetriebs die wichtigsten Informationen darstellen. Diese Informationsübermittlung kann sowohl anhand von graphischen Anzeigeelementen als auch anhand von zahlenmäßig dargestellten Werten 40 erfolgen. Im oberen Bereich des Displays 46 sind verschiedene mit Maschinen- und/oder Erntegutparametern hinterlegte Funktionsfenster 36 angezeigt, die nicht gleichzeitig auf der Basisanzeigefläche 45 dargestellt werden müssen, sondern sie können über Menüs und Untermenüs abrufbar sein, in denen sinnvoll zusammenfassbare Arbeitsparameter und/oder Erntegutparameter zusammengefasst sein können. Die Belegung der einzelnen Funktionsfenster 36 mit Arbeitsparametern und/oder Erntegutparametern ist vom Bediener frei wählbar. Die im Ausführungsbeispiel dargestellten Funktionsfenster 36 sind bedarfsweise anpassbar und zeigen einsatzbetriebsspezifische Arbeits- und/oder Erntegutparameter des sich im Einsatzbetrieb befindlichen Mähdreschers 1. Falls die Fahrgeschwindigkeitsregelung mittels des Vorfahrtreglers nun aufgrund von Erntegutparametern und/oder Arbeitsparametern begrenzt wird, wird dem Bediener entweder automatisch oder aufgrund einer entsprechenden Auswahl seitens des Bedieners ein zusätzliches Bildschirmfenster 33 angezeigt, welches Bereiche des Basisanzeigefläche 45 zeit- und bereichsweise überdeckt. In dem Bildschirmfenster 33 wird dem Bediener die von ihm definierte Regelgrenze für die maximale Fahrgeschwindigkeit im Einsatzbetrieb als Sollwert 31 sowohl zahlenmäßig ais auch als Pfeil an der entsprechenden Stelle eines den Istwert darstellenden Balkens 6 dargestellt. Zusätzlich wir ihm jeweils endseitig des Balkens 6 die mögliche minimal sowie die mögliche maximal definierbare Regelgrenze 4, als auch der jeweils aktuelle Fahrmodus 5 angezeigt, gemäß dem der Vorfahrtregler betrieben wird. Das hier dargestellte Zeichen "km/h" steht für den Fahrmodus 5 "Tempomat", bei dem die Fahrgeschwindigkeit mittels des Vorfahrtreglers geschwindigkeitsabhängig gesteuert wird. Alternativ kann das Zeichen für den Fahrmodus 5 auch als Piktogramm dargestellt werden. Dadurch, dass in dem Ausführungsbeispiel in dem Balken 6 die Ist-Geschwindigkeit geringer dargestellt ist, als der Sollwert 31 der Fahrgeschwindigkeit, erhält der Bediener eine Information darüber, dass die automatische Fahrgeschwindigkeitsregelung mittels des Vorfahrtreglers begrenzt ist. Um ihm zusätzlich eine Information darüber zu geben, welcher Erntegutparameter und/oder Arbeitsparameter des Mähdreschers begrenzend wirkt, enthält das zusätzliche Bildschirmfenster 33 ein entsprechendes Piktogramm 3. Alternativ oder zusätzlich ist es denkbar, dass die Anzeige des Piktogramms 3 in einem beliebigen anderen Bereich des Displays 46 erfolgt. In dem Ausführungsbeispiel wird dem Bediener das Piktogramm 3 für die Begrenzung des Fahrgeschwindigkeitsregelung aufgrund des Arbeitsparameters "Motorschutz" angezeigt. Motorschutz bedeutet beispielsweise, dass aufgrund unterschiedlicher Rahmenbedingungen die zur Kühlung des Verbrennungsmotors 18 eingesetzte Kühlflüssigkeit eine hohe Temperatur aufweist, so dass eine effektive Kühlung des Verbrennungsmotors 18 gefährdet sein könnte. Um nun den Verbrennungsmotor 18 vor Überhitzung zu schützen, wird die Fahrgeschwindigkeit gedrosselt, um die Belastung für den Verbrennungsmotor 18 und somit auch für dessen Kühlsystem zu verringern, bis die Kühlflüssigkeit wieder eine Temperatur aufweist, die eine effektive Kühlung des Verbrennungsmotors 18 sicherstellt. Das hier genannte Beispiel steht für eine Vielzahl von möglichen Betriebsbedingungen, die den Arbeitsparameter "Motorschutz" und eine damit verbundene Begrenzung der Fahrgeschwindigkeitsregelung mittels des Vorfahrtreglers auslösen können. Da der Bediener nun aufgrund des Piktogramms 3 weiß, dass der Arbeitsparameter "Motorschutz" die Fahrgeschwindigkeitsregelung begrenzt, kann er gezielt dieser Begrenzung entgegenwirken, ohne die Einstellungen von weiteren Erntegutparametern und/oder Arbeitsparameter anpassen zu müssen. Der Begrenzung aufgrund des Arbeitsparameters "Motorschutz" kann der Bediener entgegenwirken, indem er beispielsweise die Drehzahl des Kühlgebläses des Kühlsystems erhöht, und/oder bei zu niedrigeren Kühlflüssigkeitsstand die Menge der Kühlflüssigkeit erhöht, um eine effektive Verbrennungsmotorkühlung zu gewährleisten. Durch das gezielte Eingreifen des Bedieners wird der begrenzend wirkende Arbeitsparameter angepasst, so dass er die automatische Fahrgeschwindigkeitsregelung mittels des Vorfahrtreglers 21 nicht weiter begrenzt.
Unter "Motorschutz" ist beispielsweise weiterhin zu verstehen, dass der Verbrennungsmotor 18 davor geschützt wird, aufgrund von einer zu hohen Motordrückung stehen zu bleiben. Unter Motordrückung ist zu verstehen, dass die Drehzahl des Verbrennungsmotors 18 aufgrund von hoher Belastung absinkt. Wenn nun beispielsweise die Motordrückung aufgrund der Belastung des Mähdreschers 1 so hoch ist, dass die Gefahr besteht, dass der Verbrennungsmotor 18 stehen bleiben könnte, wird der Vorfahrtregler 21 dahingehend begrenzt, dass die Fahrgeschwindigkeit verringert wird. In einem solchen Fall wird dem Bediener dann ebenfalls das Piktogramm 3 für den begrenzenden Arbeitsparameter "Motorschutz" angezeigt. Da der Bediener nun aufgrund des Piktogramms 3 weiß, dass der Arbeitsparameter "Motorschutz" die Fahrgeschwindigkeitsregelung begrenzt, kann er gezielt dieser Begrenzung entgegenwirken, ohne die Einstellungen von weiteren Erntegutparametern und/oder Arbeitsparameter anpassen zu müssen.
Der in dem Ausführungsbeispiel beschriebene Arbeitsparameter "Motorschutz" steht für eine Vielzahl von möglichen Erntegutparametern und/oder Arbeitsparametern, die eine automatische Fahrgeschwindigkeitsregelung mittels eines Vorfahrtreglers begrenzen können.

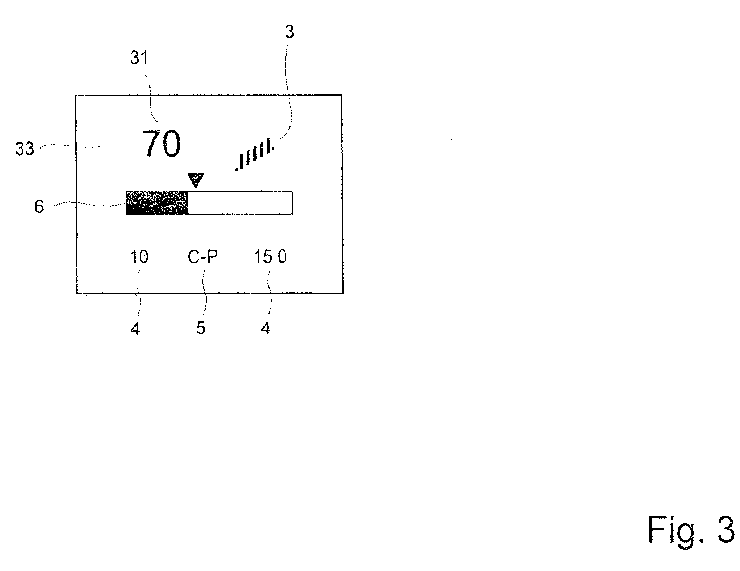

Figur 3 zeigt in einer beispielhaften Darstellung das in Figur 2 gezeigten zusätzliche Bildschirmfenster 33 in einer zweiten Ausführungsform der Erfindung. In dem Bildschirmfenster 33 wird dem Bediener die von ihm definierte Regelgrenze für die maximale Schichthöhe des Erntegutes im Schrägförderer des Mähdreschers als Sollwert 31 sowohl zahlenmäßig als auch als Pfeil an der entsprechenden Stelle eines den Istwert darstellenden Balkens 6 dargestellt. Zusätzlich wir ihm jeweils endseitig des Balkens 6 die mögliche minimal sowie die mögliche maximal definierbare Regelgrenze 4, als auch der jeweils aktuelle Fahrmodus 5 angezeigt, gemäß dem der Vorfahrtregler betrieben wird. Das hier dargestellte Zeichen "C-P" steht für den Fahrmodus 5 "Durchsatz", bei dem die Fahrgeschwindigkeit mittels des Vorfahrtreglers erntegutdurchsatzabhängig gesteuert wird. Der Erntegutdurchsatz wird definiert durch die Schichthöhe des Erntegutes im Schrägförderer. Dadurch, dass in dem Ausführungsbeispiel in dem Balken 6 die Ist-Schichthöhe geringer dargestellt ist, als der Sollwert 31 der Schichthöhe, erhält der Bediener eine Information darüber, dass die automatische Fahrgeschwindigkeitsregelung mittels des Vorfahrtreglers begrenzt ist, da der Vorfahrtregler ansonsten die Fahrgeschwindigkeit soweit erhöhen würde, bis die Ist-Schichthöhe der als Sollwert 31 definierten Schichthöhe entspricht. Um ihm zusätzlich eine Information darüber zu geben, welcher Erntegutparameter und/oder Arbeitsparameter des Mähdreschers begrenzend wirkt, enthält das zusätzliche Bildschirmfenster 33 ein entsprechendes Piktogramm 3. In dem Ausführungsbeispiel wird dem Bediener das Piktogramm 3 für die Begrenzung des Fahrgeschwindigkeitsregelung aufgrund des Arbeitsparameters "Siebverluste" angezeigt. Siebverluste bedeutet beispielsweise, dass die seitens des Bedieners definierte Regelgrenze für die Siebverluste, dass heißt die die Reinigungseinrichtung des Mähdreschers ungenutzt auf den Feldboden verlassenden Erntegutkörner, erreicht ist. Da die Regelgrenze bereits bei einem geringeren Erntegutdurchsatz, also einer geringeren Schichthöhe des Erntegutes im Schrägförderers, erreicht ist, wird der Vorfahrtregler dahingehend begrenzt, dass er die Fahrgeschwindigkeit nicht noch weiter erhöht, was zu einer weiteren Erhöhung des Erntegutdurchsatzes, also einer weiteren Erhöhung der Schichthöhe im Schrägförderer führen würde, was zwangsläufig die Siebverluste noch weiter erhöhen würde. Da der Bediener nun aufgrund des Piktogramms 3 weiß, dass der Arbeitsparameter "Siebverluste" die Fahrgeschwindigkeitsregelung begrenzt, kann er gezielt dieser Begrenzung entgegenwirken, ohne die Einstellungen von weiteren Erntegutparametern und/oder Arbeitsparameter anpassen zu müssen. Der Begrenzung aufgrund des Arbeitsparameters "Siebverluste" kann der Bediener entgegenwirken, indem er beispielsweise die Drehzahl des Reinigungsgebläses verringert, und/oder die Öffnungsweite der Sieblamellen der Reinigungssiebe vergrößert und/oder die Regelgrenze für die Siebverluste anpasst. Durch das gezielte Eingreifen des Bedieners wird der begrenzend wirkende Arbeitsparameter angepasst, so dass er die automatische Fahrgeschwindigkeitsregelung mittels des Vorfahrtreglers nicht weiter begrenzt.
Der in dem Ausführungsbeispiel beschriebene Arbeitsparameter "Siebverluste" steht für eine Vielzahl von möglichen Erntegutparametern und/oder Arbeitsparametern, die eine automatische Fahrgeschwindigkeitsregelung mittels eines Vorfahrtreglers begrenzen können.

### Bezugszeichenliste:

- 1: Mähdrescher
- 2: Arbeitsmaschine
- 3: Piktogramm
- 4: Regelgrenze
- 5: Fahrmodus
- 6: Balken
- 7: Schneidwerk
- 8: Vorsatzgerät
- 9: Erntegut
- 10: Schrägförderer
- 11: Dreschwerk
- 12: Korn-Spreu-Gemisch
- 13: Gutstrom
- 14: Reinigungseinrichtung
- 15: Hordenschüttler
- 16: Hubzylinder
- 17: Schwenkachse
- 18: Verbrennungsmotor
- 19: Fahrantrieb
- 20: Vorderräder
- 21: Vorfahrtregler
- 22: Steuer- und Regeleinheit
- 23: Sensor
- 24: Ein/Aus-Schalter
- 25: Sensor
- 26: Drehwinkelsensor
- 27: Verdrehwinkel
- 28: Arbeitsposition
- 29: Drehzahlsensor
- 30: Durchsatzsensor
- 31: Sollwert
- 32: Schichthöhenerfassungseinrichtung
- 33: Bildschirmfenster
- 34: Sensor
- 35: Körnerstrommesseinrichtung
- 36: Funktionsfenster
- 37: Klopfsensor
- 38: Ortungseinrichtung
- 39: Sensor
- 40: Wert
- 41: Anzeigeelement
- 42: Bereich
- 43: Bereich
- 44: Bereich
- 45: Basisanzeigefläche
- 46: Display
- 47: Anzeigeeinheit
- 48: Kornverlustgrenze
- 49: Sollschichthöhe
- 50: Bestandssensor
- FR: Fahrtrichtung
- BS: Bestandssignal
- DS: Dreschwerksignal
- SWS: Schneidwerkssignal
- AS: Arbeitspositionssignal
- VS: Fahrgeschwindigkeitssignal
- DSS: Durchsatzsignal
- SHS: Schichthöhensignal
- KVS: Körnverlustsignal
- PS: Positionssignal

## Patentansprüche

1. Selbstfahrende landwirtschaftliche Arbeitsmaschine (2) mit Arbeitsorganen deren Arbeitsparameter einstellbar sind und die mit einer Fahrgeschwindigkeit bewegt wird, wobei die Fahrgeschwindigkeit in Abhängigkeit von wenigstens einem Erntegutparameter und/oder einem Arbeitsparameter der Arbeitsmaschine (2) mittels eines Vorfahrtreglers (21) selbsttätig geregelt wird, und mit zumindest einer Steuer-, Bedien- und Anzeigeeinheit (22,47) mittels derer die Erntegutparameter und/oder die Arbeitsparameter der Arbeitsmaschine (2) einstellbar und anzeigbar sind,
**dadurch gekennzeichnet,**
**dass** dem Bediener der Arbeitsmaschine in der Steuer-, Bedien- und Anzeigeeinheit (22,47) unmittelbar der Erntegutparameter und/oder der Arbeitsparameter der Arbeitsmaschine (2) angezeigt wird, der aktuell die Fahrgeschwindigkeitsregelung mittels des Vorfahrtreglers (21) begrenzt.

2. Selbstfahrende landwirtschaftliche Arbeitsmaschine (2) nach Anspruch 1. **dadurch gekennzeichnet, dass** der aktuell die Fahrgeschwindigkeitsregelung mittels des Vorfahrtreglers (21) begrenzende Erntegutparameter und/oder Arbeitsparameter der Arbeitsmaschine (2) in der Steuer-, Bedien- und Anzeigeeinheit (22,47) als Piktogramm (3) angezeigt wird.

3. Selbstfahrende landwirtschaftliche Arbeitsmaschine (2) nach einem der vorstehenden Ansprüche, **dadurch gekennzeichnet, dass** der aktuell die Fahrgeschwindigkeitsregelung mittels des Vorfahrtreglers (21) begrenzende Erntegutparameter und/oder Arbeitsparameter der Arbeitsmaschine (2) in der Steuer-, Bedien- und Anzeigeeinheit (22,47) als Begriff angezeigt wird.

4. Selbstfahrende landwirtschaftliche Arbeitsmaschine (2) nach einem der vorstehenden Ansprüche, **dadurch gekennzeichnet, dass** die Anzeige des die Fahrgeschwindigkeit mittels des Vorfahrtreglers (21) begrenzenden Erntegutparameters und/oder Arbeitsparameters der Arbeitsmaschine (2) in einem gesonderten Bildschirmfenster (33) der Steuer-, Bedien- und Anzeigeeinheit (22,47) erfolgt.

5. Selbstfahrende landwirtschaftliche Arbeitsmaschine (2) nach Anspruch 4, **dadurch gekennzeichnet, dass** das gesonderte Bildschirmfenster (33) weitere Bildschirmfenster (45) der Steuer-, Bedien- und Anzeigeeinheit (22,47) zumindest zeit- und/oder bereichsweise überdeckt.

6. Selbstfahrende landwirtschaftliche Arbeitsmaschine (2) nach einem der vorstehenden Ansprüche, **dadurch gekennzeichnet, dass** zu dem wenigstens einen Erntegutparameter und/oder einen Arbeitsparameter der Arbeitsmaschine (2) jeweils zumindest eine untere Regelgrenze oder eine obere Regelgrenze oder eine untere und eine obere Regelgrenze definierbar ist.

7. Selbstfahrende landwirtschaftliche Arbeitsmaschine (2) nach Anspruch 6, **dadurch gekennzeichnet, dass** die jeweiligen Regelgrenzen mittels der Steuer-, Bedien- und Anzeigeeinheit (22,47) eingebar und/oder veränderbar sind.

8. Selbstfahrende landwirtschaftliche Arbeitsmaschine (2) nach einem der vorstehenden Ansprüche, **dadurch gekennzeichnet, dass** dem Bediener der Arbeitsmaschine (2) in der Steuer-, Bedien- und Anzeigeeinheit (22,47) jeweils sowohl der Erntegutparameter und/oder der Arbeitsparameter der Arbeitsmaschine (2) angezeigt wird, der aktuell die Fahrgeschwindigkeitsregelung mittels des Vorfahrtreglers (21) begrenzt, als auch die für den jeweiligen Erntegutparameter und/oder Arbeitsparameter der Arbeitsmaschine definierten Regelgrenzen.

9. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Arbeitsmaschine (2) die Fahrgeschwindigkeit ist.

10. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Ärbeitsmaschine (2) die Motorauslastung ist.

11. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Arbeitsmaschine (2) der Zustand eines oder mehrerer Arbeitsaggregate und/oder derer Arbeitsmedien ist.

12. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Arbeitsmaschine (2) die Reinigungsleistung einer Erntegutreinigungseinrichtung (14) der Arbeitsmaschine (2) ist.

13. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Arbeitsmaschine (2) die Abscheideleistung einer Erntegutabscheideeinrichtung der Arbeitsmaschine (2) ist.

14. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Arbeitsmaschine (2) ein Überladeprozess des Erntegutes in ein externes Transportfahrzeug ist.

15. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Arbeitsparameter der Arbeitsmaschine (2) die seitens der Arbeitsmaschine (2) erfasste Entfernung zum Reihen- bzw. Feldende bzw. -anfang ist.

16. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Erntegutparameter der den Arbeitsorganen der Arbeitsmaschine (2) zugeführte Erntegutdurchsatz ist.

17. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Erntegutparameter der Anteil der sich in einer Überkehreinrichtung der Arbeitsmaschine (2) befindlichen Erntegutkörner ist.

18. Selbstfahrende landwirtschaftliche Arbeitsmaschine (2) nach einem der vorstehenden Ansprüche, **dadurch gekennzeichnet, dass** der die Fahrgeschwindigkeitsregelung mittels des Vorfahrtreglers (21) begrenzende Erntegutparameter das Volumen der sich in einer Überkehreinrichtung der Arbeitsmaschine (2) befindlichen Erntegutmenge ist.

19. Selbstfahrende landwirtschaftliche Arbeitsmaschine (2) nach einem der vorstehenden Ansprüche, **dadurch gekennzeichnet, dass** die Fahrgeschwindigkeitsregelung mittels des Vorfahrtreglers (21) selbsttätig immer an einer durch den begrenzend wirkenden Erntegutparameter und/oder Arbeitsparameter der Arbeitsmaschine (2) bedingten Regelgrenze geregelt wird.

20. Selbstfahrende landwirtschaftliche Arbeitsmaschine (2) nach einem der vorstehenden Ansprüche, **dadurch gekennzeichnet, dass** die Arbeitsmaschine (2) ein Mähdrescher (1) ist.

## Claims

1. A self-propelled agricultural working machine (2) comprising working members whose working parameters are adjustable, and which is moved at a travel speed, wherein the travel speed is automatically regulated in dependence on at least one crop material parameter and/or a working parameter of the working machine (2) by means of a forward-travel regulator (21), and at least one control, operating and display unit (22, 47), by means of which the crop material parameters and/or the working parameters of the working machine (2) can be adjusted and displayed,
**characterised in that**
the crop material parameter and/or the working parameter of the working machine (2), which currently delimits the travel speed regulation by means of the forward-travel regulator (21) is directly displayed to the operator of the working machine in the control, operating and display unit (22, 47).

2. A self-propelled agricultural working machine (2) according to claim 1 **characterised in that** the crop material parameter and/or working parameter of the working machine (2), currently delimiting the travel speed regulation by means of the forward-travel regulator (21), is displayed in the control, operating and display unit (22, 47) as a pictogram (3).

3. A self-propelled agricultural working machine (2) according to one of the preceding claims **characterised in that** the crop material parameter and/or working parameter of the working machine (2), currently delimiting the travel speed regulation by means of the forward-travel regulator (21), is displayed in the control, operating and display unit (22, 47) as a term.

4. A self-propelled agricultural working machine (2) according to one of the preceding claims **characterised in that** the display of the crop material parameter and/or working parameter of the working machine (2) limiting the travel speed by means of the forward-travel regulator (21) is effected in a separate display screen window (33) of the control, operating and display unit (22, 47).

5. A self-propelled agricultural working machine (2) according to claim 4 **characterised in that** the separate display screen window (33) covers over further display screen windows (45) of the control, operating and display unit (22, 47) at least in time-wise and/or region-wise fashion.

6. A self-propelled agricultural working machine (2) according to one of the preceding claims **characterised in that** at least a lower regulating limit or an upper regulating limit or a lower and an upper regulating limit can be respectively defined in relation to the at least one crop material parameter and/or working parameter of the working machine (2).

7. A self-propelled agricultural working machine (2) according to claim 6 **characterised in that** the respective regulating limits can be inputted and/or altered by means of the control, operating and display unit (22, 47).

8. A self-propelled agricultural working machine (2) according to one of the preceding claims **characterised in that** both the crop material parameter and/or the working parameter of the working machine (2), which currently delimits the travel speed regulation by means of the forward-travel regulator (21), and also the regulating limits defined for the respective crop material parameter and/or working parameter of the working machine is respectively displayed to the operator of the working machine (2) in the control, operating and display unit (22, 47).

9. A self-propelled agricultural working machine (2) according to one of the preceding claims **characterised in that** the working parameter of the working machine (2), that delimits the travel speed regulation by means of the forward-travel regulator (21), is the travel speed.

10. A self-propelled agricultural working machine (2) according to one of the preceding claims **characterised in that** the working parameter of the working machine (2), that delimits the travel speed regulation by means of the forward-travel regulator (21), is the engine load.

11. A self-propelled agricultural working machine (2) according to one of the preceding claims **characterised in that** the working parameter of the working machine (2), that delimits the travel speed regulation by means of the forward-travel regulator (21), is the condition of one or more working units and/or the working media thereof.

12. A self-propelled agricultural working machine (2) according to one of the preceding claims **characterised in that** the working parameter of the working machine (2), that delimits the travel speed regulation by means of the forward-travel regulator (21), is the cleaning power of a crop material cleaning device (14) of the working machine (2).

13. A self-propelled agricultural working machine (2) according to one of the preceding claims **characterised in that** the working parameter of the working machine (2), that delimits the travel speed regulation by means of the forward-travel regulator (21), is the separating power of a crop material separating device of the working machine (2).

14. A self-propelled agricultural working machine (2) according to one of the preceding claims **characterised in that** the working parameter of the working machine (2), that delimits the travel speed regulation by means of the forward-travel regulator (21), is a transloading process for the crop material into an external transport vehicle.

15. A self-propelled agricultural working machine (2) according to one of the preceding claims **characterised in that** the working parameter of the working machine (2), that delimits the travel speed regulation by means of the forward-travel regulator (21), is the distance detected on the part of the working machine (2) relative to the end or beginning of a row or field.

16. A self-propelled agricultural working machine (2) according to one of the preceding claims **characterised in that** the crop material that delimits the travel speed regulation by means of the forward-travel regulator (21), is the crop material throughput fed to the working members of the working machine (2).

17. A self-propelled agricultural working machine (2) according to one of the preceding claims **characterised in that** the crop material parameter that delimits the travel speed regulation by means of the forward-travel regulator (21), is the proportion of the crop material grains disposed in a tailings device of the working machine (2).

18. A self-propelled agricultural working machine (2) according to one of the preceding claims **characterised in that** the crop material parameter that delimits the travel speed regulation by means of the forward-travel regulator (21), is the volume of the amount of crop material disposed in a tailings device of the working machine (2).

19. A self-propelled agricultural working machine (2) according to one of the preceding claims **characterised in that** travel speed regulation by means of the forward-travel regulator (21) is always regulated automatically at a regulating limit defined by the delimiting-effect crop material parameter and/or working parameter of the working machine (2).

20. A self-propelled agricultural working machine (2) according to one of the preceding claims **characterised in that** the working machine (2) is a combine harvester (1).

## Revendications

1. Machine de travail agricole automotrice (2) comportant des organes de travail dont les paramètres de travail sont réglables et qui se déplace à une vitesse de marche, la vitesse de marche étant régulée automatiquement en fonction d'au moins un paramètre de produit de récolte et/ou un paramètre de travail de la machine de travail (2) au moyen d'un régulateur d'avancement (21), et comportant au moins une unité de commande, de manoeuvre et d'affichage (22, 47) au moyen de laquelle les paramètres de produit de récolte et/ou les paramètres de travail de la machine de travail (2) peuvent être réglés et affichés, **caractérisée en ce que** le paramètre de produit de récolte et/ou le paramètre de travail de la machine de travail (2) qui limite momentanément la régulation de vitesse de marche au moyen du régulateur d'avancement (21) est indiqué directement à l'opérateur de la machine de travail dans l'unité de commande, de manoeuvre et d'affichage (22, 47).

2. Machine de travail agricole automotrice (2) selon la revendication 1, **caractérisée en ce que** le paramètre de produit de récolte et/ou le paramètre de travail de la machine de travail (2) qui limite momentanément la régulation de vitesse de marche au moyen du régulateur d'avancement (21) est affiché dans l'unité de commande, de manoeuvre et d'affichage (22, 47) sous forme de pictogramme (3).

3. Machine de travail agricole automotrice (2) selon une des revendications précédentes, **caractérisée en ce que** le paramètre de produit de récolte et/ou le paramètre de travail de la machine de travail (2) qui limite momentanément la régulation de vitesse de marche au moyen du régulateur d'avancement (21) est affiché dans l'unité de commande, de manoeuvre et d'affichage (22, 47) sous forme d'énoncé.

4. Machine de travail agricole automotrice (2) selon une des revendications précédentes, **caractérisée en ce que** l'affichage du paramètre de produit de récolte et/ou du paramètre de travail de la machine de travail (2) qui limite la vitesse de marche au moyen du régulateur d'avancement (21) a lieu dans une fenêtre d'écran distincte (33) de l'unité de commande, de manoeuvre et d'affichage (22, 47).

5. Machine de travail agricole automotrice (2) selon la revendication 4, **caractérisée en ce que** la fenêtre d'écran distincte (33) recouvre au moins temporairement et/ou partiellement d'autres fenêtres d'écran (45) de l'unité de commande, de manoeuvre et d'affichage (22, 47).

6. Machine de travail agricole automotrice (2) selon une des revendications précédentes, **caractérisée en ce qu'**au moins une limite de régulation inférieure ou une limite de régulation supérieure ou des limites de régulation inférieure et supérieure peuvent être définies pour ledit au moins un paramètre de produit de récolte et/ou un paramètre de travail de la machine de travail (2).

7. Machine de travail agricole automotrice (2) selon la revendication 6, **caractérisée en ce que** les limites de régulation respectives peuvent être entrées et/ou modifiées au moyen de l'unité de commande, de manoeuvre et d'affichage (22, 47).

8. Machine de travail agricole automotrice (2) selon une des revendications précédentes, **caractérisée en ce qu'**aussi bien le paramètre de produit de récolte et/ou le paramètre de travail de la machine de travail (2), qui limite momentanément la régulation de vitesse de marche au moyen du régulateur d'avancement (21), que les limites de régulation définies pour le paramètre de produit de récolte et/ou le paramètre de travail respectif de la machine de travail sont indiqués à l'opérateur de la machine de travail (2) dans l'unité de commande, de manoeuvre et d'affichage (22, 47).

9. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est la vitesse de marche.

10. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est le taux de charge du moteur.

11. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est l'état d'un ou plusieurs organes de travail et/ou de leurs fluides de travail.

12. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est l'efficacité de nettoyage d'un dispositif de nettoyage du produit de récolte (14) de la machine de travail (2).

13. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est l'efficacité de séparation d'un dispositif de séparation du produit de récolte de la machine de travail (2).

14. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est un processus de transfert du produit de récolte vers un véhicule de transport externe.

15. Machine de travail agricole automotrice (2) selon une des revendications précédentes, **caractérisée en ce que** le paramètre de travail de la machine de travail (2) qui limite la régulation de vitesse de marche au moyen du régulateur d'avancement (21) est la distance mesurée du côté de la machine de travail (2) par rapport à la fin ou au début d'un rang ou d'un champ.

16. Machine de travail agricole automotrice (2) selon une des revendications précédentes, **caractérisée en ce que** le paramètre de produit de récolte qui limite la régulation de vitesse de marche au moyen du régulateur d'avancement (21) est le débit de produit de récolte amené aux organes de travail de la machine de travail (2).

17. Machine de travail agricole automotrice (2) selon une des revendications précédentes, **caractérisée en ce que** le paramètre de produit de récolte qui limite la régulation de vitesse de marche au moyen du régulateur d'avancement (21) est la fraction de grains de produit de récolte qui se trouve dans un dispositif de recyclage des otons de la machine de travail (2).

18. Machine de travail agricole automotrice (2) selon une des revendications précédentes, **caractérisée en ce que** le paramètre de produit de récolte qui limite la régulation de vitesse de marche au moyen du régulateur d'avancement (21) est le volume de la quantité de produit de récolte qui se trouve dans un dispositif de recyclage des otons de la machine de travail (2).

19. Machine de travail agricole automotrice (2) selon une des revendications précédentes, **caractérisée en ce que**, au moyen du régulateur d'avancement (21), la régulation de vitesse de marche est régulée automatiquement toujours à une limite de régulation conditionnée par le paramètre de produit de récolte et/ou le paramètre de travail de la machine de travail (2) agissant de manière limitante.

20. Machine de travail agricole automotrice (2) selon une des revendications précédentes, **caractérisée en ce que** la machine de travail (2) est une moissonneuse-batteuse (1).
